# EUROPEAN PATENT APPLICATION

(11) **EP 2 737 933 A1**
(43) Date of publication of application: **04.06.2014**
(21) Application number: 13184861.6
(22) Date of filing: 17.09.2013
(51) Int. Cl.: B01D 45/04, B01D 45/06, B64D 33/02, F02C 7/052

(54) **Inlet particle separator system with air injection**

(30) Priority: 29.11.2012 US 201213689198
(71) Applicant: Honeywell International Inc., Morristown, NJ 07962-2245 (US)
(72) Inventor: Judd, Zedic Daniel, Morristown, NJ New Jersey 07962-2245 (US); Sheoran, Yogendra Yogi, Morrisotwn, NJ New Jersey 07962-2245 (US); Guerra, Eduardo, Morristown, NJ New Jersey 07962-2245 (US); Wong, Yates, Morristown, NJ New Jersey 07962-2245 (US)
(74) Representative: Houghton, Mark Phillip

(57) **Abstract**

An inlet particle separator system for a vehicle engine includes a hub section, a shroud section, a splitter section, and an injection opening. The shroud section surrounds at least a portion of the hub section and is spaced apart therefrom to define a passageway having an air inlet. The splitter is disposed downstream of the air inlet and extends into the passageway to divide the passageway into a scavenge flow path and an engine flow path. The injection opening is formed in and extends through the hub section, and is disposed downstream of the air inlet.

## Description

### TECHNICAL FIELD

The present invention generally relates to an inlet particle separator system for a vehicle engine, and more particularly relates to an inlet particle separator system with air injection to improve fine particulate separation efficiency.

### BACKGROUND

During operation of an aeronautical vehicle, air is induced into an engine and, when mixed with a combustible fuel, is used to generate energy to propel the vehicle. The induced air may contain undesirable particles, such as sand and dust, which can degrade engine components. In order to prevent or at least minimize such degradation, many aeronautical vehicles use an inlet particle separator system, disposed upstream of the engine, to remove at least a portion of the undesirable particles.

A conventional inlet particle separator typically includes a duct system having a fluid passageway that transitions into a scavenge flow path and an engine flow path. Air that is induced into the fluid passageway may have particles suspended therein. The inertia of relatively larger ones of the suspended particles tends to cause these particles to travel in a straight line rather than follow the fluid passageway. Because of the manner in which the inlet particle separator is configured, most of the suspended particles tend to flow into the scavenge flow path rather curve into the engine flow path. As such, relatively clean air is directed into the engine, and contaminated air, which has the particles suspended therein, is directed through the scavenge flow path and is discharged.

Conventional inlet particle separators, such as those described above, operate at relatively high efficiencies for relatively large particles (e.g., >80 microns). However, for relatively small particles (e.g., <80 microns), the efficiencies can be relatively low, resulting in a significant amount of these relatively small particles being ingested into the engine. These relatively small particles, while being potentially less troublesome than the relatively large particles, can still have some deleterious effects. For example, these particles can plug secondary flow lines and/or can melt and form glass on relatively hot engine components, such as the combustor, which can significantly reduce engine performance or have other undesirable effects.

Hence, there is a need for an inlet particle separator system that increases the separation efficiency of relatively small particles from engine inlet air without increasing core pressure loss. The present invention addresses at least this need.

### BRIEF SUMMARY

In one embodiment, an inlet particle separator system for a vehicle engine includes a hub section, a shroud section, a splitter section, and an injection opening. The shroud section surrounds at least a portion of the hub section and is spaced apart therefrom to define a passageway having an air inlet. The splitter is disposed downstream of the air inlet and extends into the passageway to divide the passageway into a scavenge flow path and an engine flow path. The injection opening is formed in and extends through the hub section, and is disposed downstream of the air inlet.

In another embodiment, an inlet particle separator system for a vehicle engine includes a hub section, a shroud section, a splitter, and an injection opening. The shroud section surrounds at least a portion of the hub section and is spaced apart therefrom to define a passageway having an air inlet and a cross sectional flow area. The hub section and the shroud section are configured such that the cross sectional flow area of the passageway decreases downstream of the air inlet to define a throat section. The splitter is disposed downstream of the throat section and extends into the passageway to divide the passageway into a scavenge flow path and an engine flow path. The injection opening is formed in and extends through the hub section. The injection opening is disposed between the air inlet and the throat section and is configured as a unitary slot that extends around the hub.

In yet another embodiment, a gas turbine engine includes a compressor section, a combustion section, and turbine section disposed in flow series. The compressor section has an air inlet, and an inlet particle separator system is coupled to, and is disposed upstream of, the compressor section. The inlet particle separator system includes a hub section, a shroud section, a splitter section, and an injection opening. The shroud section surrounds at least a portion of the hub section and is spaced apart therefrom to define a passageway having an air inlet. The splitter is disposed downstream of the air inlet and extends into the passageway to divide the passageway into a scavenge flow path and an engine flow path. The injection opening is formed in and extends through the hub section, and is disposed downstream of the air inlet.

Furthermore, other desirable features and characteristics of the inlet particle separator system will become apparent from the subsequent detailed description of the invention and the appended claims, taken in conjunction with the accompanying drawings and this background of the invention.

### BRIEF DESCRIPTION OF THE DRAWINGS

The present invention will hereinafter be described in conjunction with the following drawing figures, wherein like numerals denote like elements, and wherein:

FIG. 1 is a functional block diagram of an exemplary gas turbine engine;

FIG. 2 is a partial cross-sectional view of one embodiment of an inlet particle separator system that may be implemented in the gas turbine engine of FIG. 1; and

FIGS. 3 and 4 are simplified end views of different exemplary embodiments of a hub section that may be used to implement the inlet particle separator system of FIG. 2.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

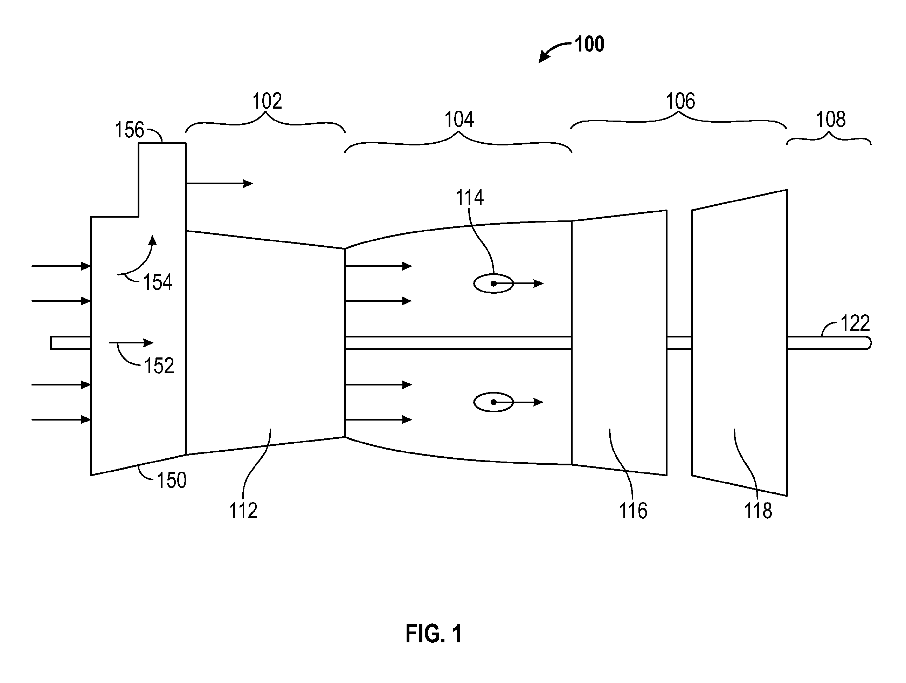

Turning now to FIG. 1, a functional block diagram of an exemplary gas turbine engine 100 is depicted. The depicted engine 100 is a single-spool turbo-shaft gas turbine propulsion engine, and includes a compressor section 102, a combustion section 104, a turbine section 106, and an exhaust section 108. The compressor section 102, which may include one or more compressors 112, draws air into the engine 100 and compresses the air to raise its pressure. In the depicted embodiment, only a single compressor 112 is shown, though it will be appreciated that one or more additional compressors could be used.

No matter the particular number of compressors 112 that are included in the compressor section 102, the compressed air is directed into the combustion section 104. In the combustion section 104, which includes a combustor assembly 114, the compressed air is mixed with fuel supplied from a non-illustrated fuel source. The fuel and air mixture is combusted, and the high energy combusted air mixture is then directed into the turbine section 106.

The turbine section 106 includes one or more turbines. In the depicted embodiment, the turbine section 106 includes two turbines, a high pressure turbine 116 and a low power turbine 118. However, it will be appreciated that the engine 100 could be configured with more or less than this number of turbines. No matter the particular number, the combusted air mixture from the combustion section 104 expands through each turbine 116, 118, causing it to rotate a power shaft 122. The combusted air mixture is then exhausted via the exhaust section 108. The power shaft 122 may be used to drive various devices within the engine or vehicle. For example, in the context of a helicopter, the power shaft may be used to drive one or more rotors.

As FIG. 1 further depicts, the gas turbine engine 100 also includes an inlet particle separator system 150. The inlet particle separator system 150 is coupled to, and disposed upstream of, the compressor section 102. The air that the compressor section 102 draws into the engine 100 first enters the inlet particle separator system 150. The inlet particle separator system 150, as will be described in more detail further below, is configured to separate the air that is drawn into the engine 100 into compressor inlet air 152 and scavenge air 154. The compressor inlet air 152 is drawn into the compressor section 102, and the scavenge air 154 is drawn into, for example, a scavenge scroll 156 and is then discharged into the atmosphere. The particle separator system 150 is additionally configured such that at least a portion of any particulate that is suspended in the air that is drawn into the engine 100 is separated therefrom and is discharged with the scavenge air 154. Thus, the compressor inlet air 152 that is drawn into the compressor section 102 is relatively clean, particulate free air.

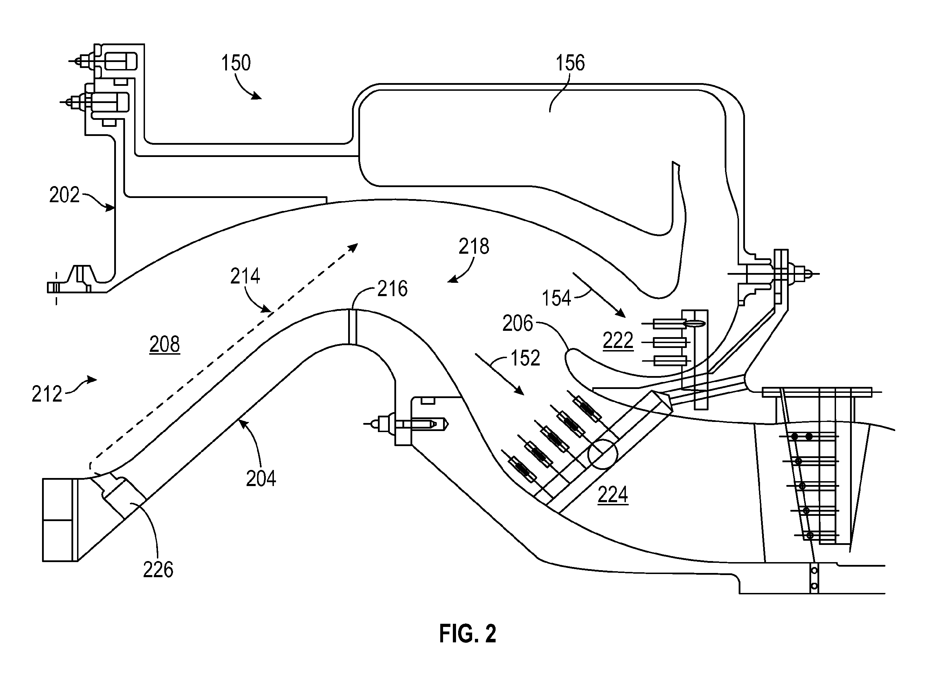

Referring now to FIG. 2, a cross section view of portions of the inlet particle separator system 150 is depicted and will be described. The inlet particle separator system 150 includes a shroud section 202, a hub section 204, and a splitter 206. The shroud section 202 surrounds at least a portion of the hub section 204 and is spaced apart therefrom to define a passageway 208 having an air inlet 212. The air inlet 212 is configured to receive the air that is drawn into the engine 100.

The shroud section 202 and the hub section 204 are configured such that the cross sectional flow area of the passageway 208 decreases downstream of the air inlet 212 to define a throat section 214. The shroud section 202 and hub section 204 may be variously configured to implement this functionality, but in the depicted embodiment the outer diameter of the hub section 204 gradually increases downstream of the air inlet 212 to define the throat section 214 at a point of maximum diameter 216. As FIG. 2 depicts the diameter of the hub section 204 then decreases downstream of the throat section 214, to define what is referred to herein as the separation section 218.

The separation section 218 is where the air that is drawn into the engine 100, and more specifically the air that is drawn into the air inlet 212, is separated into the compressor inlet air 152 and the scavenge air 154. The separation section 218 is also where the splitter 206 is disposed. In particular, the splitter 206 extends into the passageway 208 downstream of the air inlet 212, and more specifically downstream of the throat section 214, and divides the passageway 208 into a scavenge flow path 222, into which the scavenge air 154 flows, and an engine flow path 224, into which the compressor inlet air 152 flows.

As is generally known, air that is drawn into the engine 100 may have particles entrained therein. Due to their inertia, relatively larger (e.g., >80 microns) entrained particles will tend to collect adjacent the shroud section 202, and will thus flow with the scavenge air 154 into the scavenge flow path 222. As previously noted, the scavenge air 154 is drawn into the scavenge scroll 156 and is then discharged into the atmosphere. The compressor inlet air 152, which has none (or at least very few) relatively large particles entrained therein, flows into the engine flow path 224, and ultimately into the compressor section 102 (not depicted in FIG. 2).

It was noted above that, at least in some instances, relatively small entrained particles (e.g., <80 microns) can flow with the compressor inlet air 152 into the engine flow path 224, and thus be ingested into the engine. To prevent, or at least inhibit, a large portion of the relatively small particles from flowing into the compressor section 102, the depicted inlet particle separator system 150 includes an injection opening 226. The injection opening 226 is formed in and extends through the hub section 204, and is disposed downstream of the air inlet 212. It should be noted that in a particular preferred embodiment, as FIG. 2 depicts, the injection opening 226 is disposed between the air inlet 212 and the throat section 224. It will be appreciated, however, that the specific position of the injection opening 226 within this region may vary, and may be determined for specific applications based on testing.

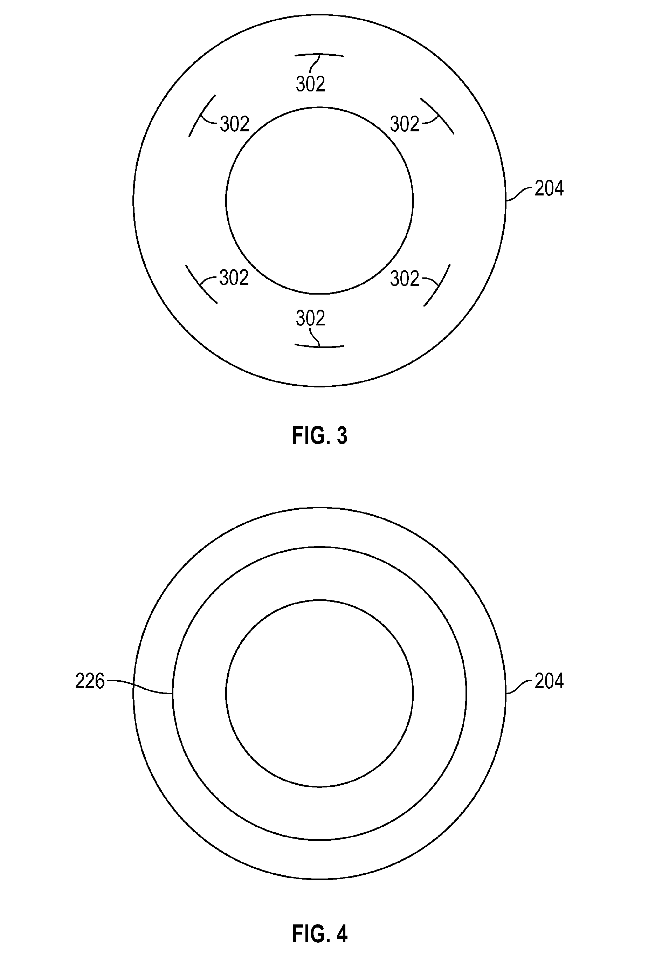

In addition to variations in the specific locations, the configuration and implementation of the injection opening 226 may also vary. For example, the injection opening 226 may be implemented as a plurality of openings spaced evenly apart around the hub section 204. The plurality of openings may also be variously configured and implemented. For example, each the openings may be a plurality of perforations of various sizes and shapes. In one embodiment, such as the one depicted in FIG. 3, each of the openings 302 is configured as a slot having a predetermined arc length. In a particular preferred embodiment, which is depicted in FIG. 4, the injection opening 226 is configured as a unitary slot that extends around the hub section 204.

No matter its specific location and implementation, the injection opening 226 is adapted to receive a flow of pressurized air from a pressurized air source that will produce a relatively high-velocity jet. The specific source of pressurized air flow may vary and may include, for example, anti-ice air, bleed air, environmental control system air, or air discharged directly from the compressor section, just to name a few non-limiting examples. Regardless of the specific pressurized air flow source, the injection opening 226 is configured, upon receipt of the pressurized air, to form a "ramp" or "curtain" of relatively high-velocity air (depicted in phantom in FIG. 2) that extends from the injection opening 226 to the throat section 214. The relatively high-velocity "ramp" or "curtain" of pressurized air deflects at least a portion of the relatively small entrained particles outwardly toward the shroud section 202. As a result, these relatively are more likely to flow with the scavenge air 154 into the scavenge flow path 222.

The inlet particle separator system 100 described herein increases the separation efficiency of relatively small particles from engine inlet air without increasing (or at least significantly impacting) core pressure loss.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An inlet particle separator system for a vehicle engine, comprising:
a hub section;
a shroud section surrounding at least a portion of the hub section and spaced apart therefrom to define a passageway, the passageway having an air inlet;
a splitter disposed downstream of the air inlet and extending into the passageway to divide the passageway into a scavenge flow path and an engine flow path; and
an injection opening formed in and extending through the hub section, the injection opening disposed downstream of the air inlet.

2. The system of claim 1, wherein:
the passageway has a cross sectional flow area;
the hub section and the shroud section are configured such that the cross sectional flow area of the passageway decreases downstream of the air inlet to define a throat section; and
the injection opening is disposed between the air inlet and the throat section.

3. The system of claim 2, wherein the injection opening is adapted to receive a flow of pressurized air and is configured, upon receipt of the pressurized air, to form a ramp of air that extends from the injection opening to the throat section.

4. The system of claim 2, wherein:
the hub section and the shroud section are configured such that the cross sectional flow area of the passageway increases downstream of the throat section to define a separation section that includes the scavenge flow section and the engine flow path; and
the splitter extends into the separation section.

5. The system of claim 1, wherein the injection opening comprises a plurality of openings spaced evenly apart around the hub section.

6. The system of claim 5, wherein each of the openings is configured as a slot having a predetermined arc length.

7. The system of claim 1, wherein the injection opening is configured as a unitary slot that extends around the hub section.
